Europäisches Patentamt

European Patent Office

Office européen des brevets

(11) Publication number: **0 251 791 B1**

# EUROPEAN PATENT SPECIFICATION

(45) Date of publication of patent specification: **15.01.92**

(21) Application number: **87305853.1**

(22) Date of filing: **01.07.87**

(51) Int. Cl.5: **C08L 77/00**, C08L 67/02,
C08L 9/02, C08K 3/22,
C08L 33/06, C08L 9/00,
C08J 7/18

The file contains technical information submitted after the application was filed and not included in this specification

(54) **Elastomeric compositions.**

(30) Priority: **02.07.86 GB 8616135**

(43) Date of publication of application:
**07.01.88 Bulletin 88/01**

(45) Publication of the grant of the patent:
**15.01.92 Bulletin 92/03**

(84) Designated Contracting States:
**AT BE CH DE ES FR GB GR IT LI LU NL SE**

(56) References cited:
**EP-A- 0 144 767**
**FR-A- 2 590 586**
**US-A- 4 124 653**
**US-A- 4 367 316**
**US-A- 4 619 971**

**PATENT ABSTRACTS OF JAPAN, vol. 3, no. 63, 30th May 1979, page 156 C-47; & JP - A - 54 39457 (TORAY K.K.) 26-03-1979**

(73) Proprietor: **BICC Public Limited Company Devonshire House Mayfair Place London W1X 5FH(GB)**

(72) Inventor: **Corish, Patrick Joseph Mayberry Church Road Snitterfield Stratford-on-Avon Warwickshire(GB)**
Inventor: **Ohbi, Daljit Singh 79 Edward Avenue Off Narborough Road South Leicester(GB)**

(74) Representative: **Poole, Michael John et al BICC plc Group Patents & Licensing Dept. Network House 1, Ariel Way Wood Lane London W12 7SL(GB)**

## Description

This invention relates to elastomeric compositions that are halogen free, flame-retardant and resistant to hydrocarbon oils and many other fluids, and which in preferred forms are suitable, inter alia, for making electric cable sheaths to comply with Naval Engineering Standard NES 518 (issue 2) promulgated by the UK Ministry of Defence (Controllerate of the Navy) in February 1986. It includes cables sheathed with the compositions.

Cables on board ship (whether naval or merchant) are liable to rough usage, including (but not limited to) accidental exposure to sea-water, fuel oil, lubricating oil, hydraulic fluid and other liquids; and the hazards of fire at sea will always be greater than on land. There is therefore a demand for cables that contribute little or nothing to the spread of fire and cannot produce hydrogen chloride fumes or other corrosive volatiles under fire conditions, which are resistant to exposure to at least the fluids indicated, besides having good abrasion resistance and long service life. Such demands cannot be met by conventional cable-making materials.

Halogen-free elastomeric compositions with good fluid resistance exist, but some are not usefully cross-linkable by any of the conventional techniques of the cable industry and others fail to meet one or more of the requirements of the Standard.

In accordance with the invention, a halogen-free, flame-retardant elastomeric composition which is cross-linkable at least by high-energy irradiation and (when cross-linked) is resistant to sea-water, hydrocarbon oils and hydraulic fluids comprises

(A) an oil-resistant elastomeric thermoplastic segmented copolymer selected from polyether-polyesters and polyether-polyamides;

(B) an elastomeric nitrile polymer having (i) a hydrocarbon main chain which chain is saturated or contains up to a maximum of one double bond and/or epoxidised double bond for every five of its carbon atoms and (ii) a minimum of one -CN side-chain per 22 chain carbon atoms and up to one hetero side chain per four carbon atoms with the proviso that at least 70% of the hetero side chains are -CN;

(C) optionally up to one part for each three parts of ingredient (B) of another miscible elastomer which is a diene elastomer or an acrylic elastomer; and

(D) an active flame-retardant filler that evolves substantial amounts of bound water on heating at some temperatures in the range 150-700 $^\circ$ C;

Ingredient (A) constituting 10-70% of total elastomer content and Ingredient (D) being present in an amount up to about twice the total elastomer content but sufficient for the composition to have an oxygen index of at least 25.

One or more of the Ingredients (A), (B), (C) and (D) may of course, be a mixture of two or more materials, each of which is of the class defined.

It is noted, for avoidance of doubt, that the term 'hetero side chain' as used herein means a side chain not consisting solely of carbon and hydrogen atoms; and that percentages of side-chains are expressed by number but percentages and parts of ingredients are expressed by weight.

Preferred Ingredient (A) is one of the segmented polyester/polyether elastomers sold under the trademark HYTREL, of which we prefer those believed to be constituted of polytetramethylene ether glycol terephthalate segments of approximate or average repeating unit $[[-O-(CH_2)_4-]_p-O-CO-\phi-CO-]$, in which p is about 14 and $\phi$ = phenylene, and 1,4 butanediol polyether segments of repeating unit $[-O-(CH_2)_4-]$. 'High Productivity' grades of HYTREL, which differ in having their polyether segments based on polypropylene glycol, can also be used.

So far as the applicants know, the only alternatives for Ingredient A at present commercially available on the United Kingdom market are the segmented elastomeric polyether-polyamides sold under the trademark PEBAX. These are believed to consist of polyamide segments derived from 12-amino dodecanoic acid or its lactam (the monomer of "nylon 12") and polyether segments derived from 1,4 butanediol (also called tetramethylene glycol).

Ingredient (B) may be a random copolymer of butadiene and acrylonitrile modified by hydrogenation, epoxidization, or the inclusion of a third monomer (within the limitations already specified); particularly useful third monomers are those (such as methacrylic acid or acrylic acid) which introduce -COOH side-chains and those (such as N(4 anilinophenyl) methacrylamide, $H-\phi-NH-\phi-NH-\phi-CO-C(CH_3)=CH_2$) which confer on the polymer an inherent resistance to oxidation (bound antioxidants). Alternatives include: ordered (e.g. alternate) butadiene/acrylonitrile copolymers; partially or fully hydrogenated and/or epoxidised ordered butadiene/acrylonitrile copolymers; and copolymers of isoprene with acrylonitrile. Fully hydrogenated polymers are preferred in all cases because they have significantly better ageing properties. In all cases hydrocarbon side chains may be present in appropriate amounts, an important example being phenyl side-chains in styrene-modified elastomers.

Optional Ingredient (C), if present, is preferably selected either from diene rubbers, such as natural rubbers, styrene-butadiene rubbers and polybutadiene rubbers, that have been modified to confer oil resistance upon them, for example by epoxidisation, methacrylation or maleinization or from the oil-resistant acrylic elastomers such as the copolymers of ethylene with methyl acrylate, ethyl acrylate or butyl acrylate, or modified forms with a minor content of a third comonomer, such as the material sold under the trademark VAMAC.

However, if other requirements make it desirable, diene elastomers that are not by themselves oil resistant can be used, though naturally the amount should be kept as small as practicable. Examples include unmodified styrene-butadiene rubbers, ethylene-propylene copolymer elastomers, ethylene-propylene-diene terpolymer elastomers (EPDM), polybutadienes and conjugated diene-isobutylene copolymer elastomers (butyl rubber). When more than one of these Ingredient (C) elastomers is present, the limit of one part per three parts of Ingredient (B) then applies to the total of all Ingredient (C) elastomers.

Preferably any Ingredient (C) elastomer is co-cross-linkable with Ingredient (B), especially if Ingredient (C) is not oil resistant and/or the proportion of Ingredient (C) is in the upper part of its range; this may sometimes be considered essential for particular applications.

Preferred water-evolving flame-retardant fillers are alumina trihydrate, magnesium hydroxide, basic magnesium carbonate, and magnesium carbonate subhydrate. Minor amounts of additional fillers can be used.

The compositions of the invention may also include customary amounts of conventional compounding ingredients, such as stabilisers, antioxidants, cross-linking agents and/or promotors, pigments, plasticisers/extenders and lubricants.

When magnesium hydroxide is used, the ingredients can be pre-blended by conventional mixing techniques at a temperature appropriate to Ingredient A, say about 160-180°C. When alumina trihydrate (which loses significant amounts of water at 160°C) is used, this presents obvious problems. Surprisingly, however, we have found that a pre-blend of Ingredients (A) and (B) will satisfactorily accept the addition of fillers at temperatures much lower than is necessary for producing the pre-blend, and in another application filed on the same day as this application (EP-A 0251792) we have described and claimed those of the compositions defined herein in which the filler is alumina trihydrate and a method of making them which comprises first blending Ingredient (A) with Ingredient (B) at a temperature not less than 160°C and when a pre-blend has been prepared reducing the temperature below 150°C (preferably to about 135°C) and mixing in the alumina trihydrate at such reduced temperature.

Optional Ingredient (C), if used, is preferably added at the first stage; cross-linking agents and volatile ingredients (e.g. some antioxidants) at the second; and other optional ingredients may be added at either stage, as convenient.

Properties achieved by the compositions of the invention are strongly dependent on the effective mixing and dispersion of the ingredients; the use of a 2-roll mill or of an internal mixer such as Francis Shaw's K2A Intermixer for at least the second stage is strongly recommended.

In the following Examples, which illustrate the invention, the ingredients identified by trade designations are identified as follows (words marked # are trademarks):

Polymers

| | |
|---|---|
| Chemigum# NX775: | a carboxylated butadiene/acrylonitrile elastomer containing about one double bond per 5 chain carbon atoms, about one -CN side chain per 12 chain carbon atoms and about one -COOH group per 50 chain carbon atoms. |
| Chemigum# N715: | a butadiene/acrylonitrile elastomer containing about one double bond per 6 chain carbon atoms and about one - CN side chain per 11 carbon atoms. |
| Chemigum# HR665: | a butadiene/acrylonitrile/bound antioxidant elastomer containing about one double bond per 6 chain carbon atoms and about one -CN side chain per 10 carbon atoms. |
| Chemigum# HR365: | a butadiene/acrylonitrile/bound antioxidant elastomer containing about one double bond per six chain carbon atoms and about one -CN side chain per eight carbon atoms. |
| Hytrel# 4056: | an elastomeric segmented polyester-polyether of the preferred kind already described. |

| | |
|---|---|
| Pebax# 2533 and Pebax# 3533: | two grades of elastomeric segmented polyamide-polyethers of the kind already described of Shore D hardness 25 and 35 respectively. |
| Pebax# 2533(P): | a proprietary pre-plasticised grade of Pebax 2533. |
| Therban# 1707: | a fully hydrogenated butadiene/acrylonitrile copolymer with about one - CN side chain per 20 chain carbon atoms. |
| Vamac# G: | an elastomeric ethylene/methyl acrylate copolymer modified with carboxylic acid groups. |

Fillers

| | |
|---|---|
| Hydral# 705 and Hydral# 710B: | filler grade hydrated alumina trihydrates of median particle size respectively 0.5 and 1$\mu$m. |
| Hydral# 710B (SD): | a spray-dried version of Hydral# 710B. |
| Kisuma# 5B and Kisuma# 5E: | special filler grades of magnesium hydroxide, coated for enhanced compatibility with polymeric systems. |
| Lycal# 96HSE: | filler grade magnesium hydroxide (uncoated). |
| Mistron Vapour#: | Platy Talc (98%) |
| Silica HDK H20: | silane-treated hydrophobic reinforcing silica filler of nominal BET surface area 170m$^2$/g |
| SRF: | a semi-reinforcing carbon black of nominal surface area (electron microscopy) 40m$^2$/g |
| Ultrafine 15E: | alumina trihydrate of BET specific surface area about 15m$^2$/g |
| Ultrafine 35E: | alumina trihydrate of BET specific surface area about 35m$^2$/g |
| Vulcasil# S: | precipitated silica of nominal surface area 175m$^2$/g. |

Coating Agents

| | |
|---|---|
| Silane A172: | vinyl-tris ($\beta$-methoxyethoxy) silane. |
| Silane A9774: | a proprietary silane supplied by Union Carbide Corporation and believed to be a mixture of approximately equal parts of vinyl triethyoxysilane and an oligomer thereof. |
| Silane A1100: | $\gamma$ aminopropyl triethoxysilane. |

Plasticisers and Lubricants

| | |
|---|---|
| Bisoflex# TL79T (stab): | stabilised trimellitate of predominantly linear alcohols, C$_7$ to C$_9$. |
| Bisoflex# TOT | : tri 2-ethylhexyl trimellitate |
| Bisoflex# T810T (stab): | stabilised trimellitate of C$_8$ and C$_{10}$ linear alcohols. |
| Monoplas# 530: | another C$_7$ to C$_9$ trimellitate plasticiser |
| Plasticator# 85: | an ether thioether plasticiser. |
| Reofos# 95: | tris(isopropylated phenyl) phosphate. |

Curative Systems:

| | |
|---|---|
| HVA-2: | N,N′ meta phenylene dimaleimide |
| Perkadox 14/40: | a 40% dispersion of a bis (tert butyl peroxy isopropyl) benzene in a solid carrier. |
| Sartomer# 350: | trimethylolpropane trimethacrylate |
| TAC: | Triallylcyanurate. |

Antioxidants, Stabilisers etc.

| | |
|---|---|
| Agerite# Resin D: | polymerised 1,2 dihydro 2,2,4 trimethyl quinoline |
| Arbestab DSTDP: | distearyl thio dipropionate. |
| Dythal: | lead phthalate paste (2 parts lead phthalate to 1 part Monoplas plasticiser, for which see above) |
| Flectol# H or Flectol#: | polymerised 1,2 dihydro 2,2,4 trimethyl quinoline |
| Hytrel# 10MS: | polycarbodiimide, 20% in a Hytrel masterbatch |
| Hytrel# G30HS: | Proprietary Hytrel antioxidant masterbatch. |
| Irganox# 1010: | a sterically hindered phenolic antioxidant. |

| Kemgard# 911A: | proprietary molybdenum based smoke suppressant. |
| Kenreact# TTS: | iso propyl triisostearyl titanate |
| Maglite# DE: | high activity magnesium oxide |
| Naugard# 445: | an alkylated diphenolamine |
| Rhenogran# P50: | 50% masterbatch of polycarbodiimide in an ethylene-vinyl acetate copolymer |
| Robac# NiBuD: | Nickel dibutyl dithiocarbonate |
| Santoflex# IPPD: | N-isopropyl-N'-phenyl-para-phenylene diamine. |
| Vulcanox# MB-2: | mixture of 4- and 5- methyl 2-mercaptobenzimidazole. |
| Vulcanox# MB-2: | mixture of 4- and 5- methyl 2-mercaptobenzimidazole in micro granule form. |
| Vulcanox# ZMB-2: | mixture of zinc salts of 4- and 5-methyl 2-mercaptobenzimidazole. |
| Weston 618: | distearyl pentaerythritol diphosphite. |

Three mixing procedures were used in the Examples

Procedure A

This is a two-stage process using a two-roll mill. In the first stage, the mill rolls were pre-heated to about 165°C and the segmented polymer (Ingredient A) introduced, together (when appropriate) with Hytrel# antioxidant masterbatch. When fluxed, the nitrile elastomer (Ingredient B) was added and blended in, followed when required by Arbestab DSTDP or Weston 618 antioxidant. After blending for two minutes, the temperature was gradually reduced to 130°C and the mixture sheeted off and allowed to mature for about 24 hours. In the second stage, the mills rolls were pre-heated to about 140°C and the matured mixture introduced and plastified. Any antioxidant not already present was added, followed by the filler in four equal batches; when a silane coupling agent was used, this was added with the first batch of filler; when Kenreact# TTS was used, this was added with the second batch of filler and Dythal# paste added with the third: otherwise half the Dythal# paste was added with each of the second and third batches of filler. Immediately after addition of the last batch of filler, the plasticiser was added gradually over a period of around two minutes. The temperature was now reduced to 120°C and the crosslink promoter (or coagent) added, and mixing continued until the blend was visually uniform.

Procedure B

This is also a 2-stage process but uses a Banbury mixer; in the first stage this was preheated to 160°C and all the polymeric ingredients and masterbatches added. After two minutes, or when mixing was evident, Weston 618 or Arbestab DSTDP was added and mixing continued for a further 5 minutes, with cooling for the last 2 minutes. The mix was then 'dumped', sheeted off and matured for about 24 hours. In the second stage, the Banbury chamber was preheated to 130°C and the matured blend introduced. After it had masticated for about 90 seconds, the antioxidant(s) was/were added followed by the filler in three equal portions: the first together with the silane coupling agent, the second with the Dythal# paste, as the third with the plasticiser(s). The curing coagent was added and cooling immediately commenced, and the mix 'dumped' and sheeted off within about 2 minutes.

Procedure C

This procedure (used only when the filler was magnesium hydroxide) was similar to Procedure A except that it was conducted in a single operation with the first batch of filler added three minutes after the Weston 618 or Arbestab DSTDP and cooling commencing only on addition of the fourth batch of filler.

Example 1

36 parts of the segmented copolymer Hytrel# 4056 was blended with 60 parts of the carboxylated nitrile rubber Chemigum# NX775, 120 parts of filler Hydral# 710B, 4 parts Hytrel# masterbatch 10MS, 10 parts SRF, 4 parts of a 50% mixture of Silane A172 with an inert diluent, 4 parts Kemgard# 911A, 4 parts of a 70%-active TAC formulation, 6 parts of Dythal#, 10 parts Monoplas# 530, and 2 parts Agerite# resin D, using Procedure B in a laboratory Banbury mixer. Sheets 150 mm square and 1.0mm thick were cured by electron-beam irradiation at a dose of 175kGy, and samples prepared according to the requirements of NES 518 were found to have a tensile strength of 10.8 MPa, 100% modulus of 9.6 MPa, elongation (at break) of 250% and tear resistance of 5.6 N/mm. The 'K factor' of insulation resistance was 0.1 MΩkm, and oxygen index 30.5. Fluid resistance was measured by exposing separate irradiated samples for 28 days to diesel fuel (DERV) at 20°C, lubricating fluid OX-38 at 50°C and de-ionised water at 50°C. The volume swelling observed was respectively 8.4%, 6.3% and 11%; the percentage of tensile strength retained 90%, 102% and 73%, and the percentage of elongation at break retained 95%, 95% and 103%.

Example 2

This was identical with Example 1 except that 3 parts SRF and 7 parts of Vulcasil# S were used instead of 10 parts SRF. Mechanical and electrical properties were found to be substantially the same.

Example 3

27 parts Hytrel# 4056 was blended with 70 parts Chemigum# NX 775, 3 parts Hytrel# 10MS and other ingredients as listed in Example 1 (except the Agerite# Resin D was replaced by 1 part of Flectol# H) using Procedure A. After processing as before, the tensile strength was found to be 11.8 MPa, 100% modulus 8.8 MPa, elongation value 330%, tear resistance 7.1 N/mm; the K factor was found to be 0.89 MΩkm and the oxygen index 30.7. In the fluid resistance test, the swelling volumes were 8.2%, 8.7% and 11.7%, tensile retention 92%, 96% and 75% and elongation retention 85%, 100% and 87%.

Example 4

36 parts Hytrel# 4056, 60 parts Chemigum# NX775, 4 parts Hytrel# 10MS and 114 parts Hydral# 710B were blended with 2 parts SRF, 2 parts Silane Y9774, 15 parts Vulcasil# S, 4 parts Kemgard# 911A, 4 parts 70%-active TAC formulation, 6 parts Dythal#, 10 parts Bisoflex# TL79T (stab) and 1 part Flectol# H using Procedure A. Samples were prepared and irradiated as before, and found to have a tensile strength of 11.1 MPa, 100% modulus 10.2 MPa, and hot modulus at 150°C 1.58 MPa elongation 230%; tear resistance 7.4. N/mm; The K factor was 0.06 MΩkm. In accelerated ageing tests, the elongation at break was found to be 130% after 7 days at 110°C, 60% after 3 days at 135°C, and only 5% after 7 days at 135°C.

Examples 5-8

The compositions for these Examples were as Example 4 except for the following modifications to the stabliser system:
Example 5: 3 parts Santoflex# IPPD added
Example 6: 3 parts Vulcanox# MB-2 added
Example 7: 2 parts Vulcanox# MB-2 added and content of Flectol# H increased to 2 parts
Example 8: 3 parts Irganox 1010 added
Examples 5, 6 and 8 used Procedure A; Example 7 used procedure B on a full-scale industrial mixer (a Francis Shaw Intermix type K2A.) Properties were as follows (in the same units as above).

| Example | 5 | 6 | 7 | 8 |
|---|---|---|---|---|
| Tensile strength | 10.4 | 10.2 | 12.4 | 11 |
| 100% modulus | 9.0 | 9.6 | 10.2 | 9.2 |
| Elongation | 220 | 290 | 300 | 230 |
| Tear resistance | 8.7 | 10 | 5.9 | 7.1 |
| 100% modulus (150°C) | 0.9 | 0.81 | --- | 1.3 |
| K Factor | 0.29 | 0.98 | 0.6 | 0.76 |
| Elongation after 7 days ageing at 110°C | 130 | 230 | 190 | 155 |
| Elongation after 3 days ageing at 135°C | 95 | 135 | 170 | 60 |
| Elongation after 7 days ageing at 135°C | 20 | 60 | 20 | 10 |

and additionally for Example 7:
oxygen index 30.1
temperature index 260
elongation after exposure at 110°C for 14, 21 and 28 days, 150%, 110% and 70% respectively

| Fluid resistance: | DERV | OX-38 | Water |
|---|---|---|---|
| Volume swelling: | 7.8 | 7 | 15.7 |
| Tensile strength retention | 101 | 100 | 93 |
| Elongation retention | 104 | 97 | 117 |

Example 9

This differed from Example 8 only in having a non-carboxylated nitrile rubber, Chemigum # N715, in place of Chemigum# NX 775. Tensile strength of the irradiated samples was 4.9 MPa, 100% modulus 3.5 MPa at 20°C and 0.74 MPa at 150°C, elongation value 320%, tear resistance 6.6N/mm; the K factor was 0.89; and elongation values after ageing were 285% after 7 days at 110°C, 175% after 3 days at 135°C and 50% after 7 days at 135°C.

Examples 10-11

36 parts Hytrel# 4056 was blended with 30 parts each of Chemigum# NX775 and Chemigum# HR 665, 4 parts Hytrel# masterbatch 10 MS, 2 parts Hytrel# masterbatch G30 HS, 115 parts Hydral# 710B, 2 parts SRF, 10 parts Silica HDK H20, 4 parts Kemgard# 911A, 2 parts Sartomer# 350, 6 parts Dythal#, 10 parts Bisoflex# TL79T (stab), 1 part Flectol# H, 0.25 parts Weston 618, 4 parts Maglite DE, 2 parts Silane Y9774 and 2 parts of either Vulcanox# MB-2 (Example 10) or Naugard 445 (Example 11) using Procedure A. Initial mechanical properties of irradiated samples were substantially the same for both Examples:
Tensile strength 11.2 and 11.0 MPa respectively
100% modulus 10.4 and 10 MPa respectively
Elongation 250%
Tear resistance 5.2N/mm.
Elongation values after ageing at 110°C showed some significant differences between Examples 10 and 11, but those after ageing at 135°C were inconclusive:

| | Example 10 | Example 11 |
|---|---|---|
| 110°C - 14 days | 165% | 102% |
| - 21 days | 159% | 85% |
| - 28 days | 170% | 80% |
| 135°C - 7 days | 90% | 100% |
| - 14 days | 70% | 20% |
| - 28 days | 5% | 5% |

Examples 12-15

In each of the Examples, a blend was made by Procedure A and included 54 parts Hytrel# 4056, 20 parts each Chemigum# NX775 and Chemigum# HR665, 6 parts Hytrel# masterbatch 10MS, 3 parts Hytrel# masterbatch G30HS, 110-125 parts Hydral# 710B, 2 parts SRF, 4 parts Kemgard# 911A, 2 parts Sartomer# 350, 6 parts Dythal#, 1.5 parts Kenreact# TTS, 4 parts Maglite# DE and 2 parts Silane Y9774. The specific amounts of Hydral# 710B was 110 parts in Example 12, 125 parts in Examples 13 and 15 and 120 parts in Example 14. In addition: Examples 12-14 included 10 parts Silica HDK H20; Examples 13-15 included 1.5 parts zinc stearate; Examples 12-14 included 15 parts Bisoflex# TL79T (stab) and Example 15 the same weight of Plasticator# 85; Examples 12-14 included 2 parts Vulcanox# MB-2 and Example 15 the same weight of Vulcanox# ZMB-2; Examples 12, 13 and 15 contained respectively 0.25, 1 and 1 parts of Robinson DSTDP and Example 14 contained 1 part of Weston 618.
Physical properties of irradiated samples (in the same units as before) were as follows:-

| Example | 12 | 13 | 14 | 15 |
|---|---|---|---|---|
| Tensile strength | 10.8 | 10.4 | 8.1 | 7.6 |
| 100% modulus | 9.4 | --- | 7.4 | 6.4 |
| Elongation | 350 | 167 | 250 | 280 |
| Tear resistance | 6.4 | --- | 5.3 | 5.5 |

Additional properties measured for Example 12 only were:

| K Factor | 0.2 MΩ km |
|---|---|
| Oxygen index | 26.4 |

Volume swelling in fluid resistance test:

| in DERV | 5.0 |
|---|---|
| in OX-38 | 4.2 |
| in water | 7.7 |

Elongation after ageing
at 110°C - 168% after 14 days, 150% after 28 days
at 135°C - 110% after 7 days, 64% after 14 days 30% after 21 days, 5% after 28 days
at 150°C - 80% after 3 days, 35% after 5 days 10% after 7 days.

Example 16

This was similar to Example 10, except that Silica HDK H20, Flectol# H and Weston 618 were omitted, and 10 parts zinc oxide, 1.5 parts zinc stearate, 1.5 parts Kenreact# TTS and 1 part Arbestab# DSTDP added. Initial tensile strength and elongation were 9.6 MPa and 298% respectively, and elongation after ageing 5 days at 150°C was 50%.

Example 17

This differed from Example 16 only in that 10 parts of Silica HDK H20 was retained and the zinc oxide content was only 6 parts. Tensile strength was 10.3 MPa, 100% modulus 8.4 MPa, elongation 260%, tear strength 4.2 N/mm.

Examples 18-19

Procedure A was used to blend 36 parts Hytrel# 4056, 60 parts Chemigum# HR 665, 4 parts Hytrel# masterbatch 10MS, 2 parts Hytrel# masterbatch G30HS, 70 parts Hydral# 710B, 30 parts Hydral# 705, 2 parts SRF, 20 parts Silica HDK H20, 4 parts Kemgard# 911A, 3 parts Sartomer# 350, 6 parts Dythal#, 1.5 parts Kenreact# TTS, 1.5 parts zinc stearate, 2 parts Vulcanox# MB-2, 0.5 parts Weston 618, 2 parts Silane Y9774, 4 parts Maglite# DE, and 10 parts of either Plasticator# 85 (Example 18) or Bisoflex 810T (stab) (Example 19). Properties (in the same units as before) were as follows:-

EP 0 251 791 B1

| Example | 18 | 19 |
|---|---|---|
| Tensile strength | 9.2 | 9.6 |
| 100% modulus | 5.4 | 5.4 |
| Elongation | 300 | 300 |
| Tear resistance | 3.8 | 4.1 |
| K Factor | 0.01 | 0.35 |
| Oxygen Index | 29.5 | 28 |
| Elongation after ageing | | |
| at 135°C - 7 days | 190 | 200 |
| -14 days | 110 | 130 |
| -21 days | 80 | 50 |
| -28 days | 50 | 20 |
| at 150°C - 3 days | 120 | --- |
| - 5 days | --- | 140 |
| - 7 days | 60 | 40 |
| - 9 days | 40 | --- |

Example 20

Procedure C was used to make up a formulation similar to that of Example 12 except that (A) all 40 parts of nitrile rubber was Chemigum# HR665 and the Hydral# 710B was replaced by 110 parts of Lycal 96 HSE. Samples were prepared and irradiated as in Example 1 and found to have a tensile strength of 9 MPa, 100% Modulus of 8.6 MPa, elongation of 150% and tear resistance of 4.9 N/mm.

Example 21

Procedure C was used to mix 36 parts of Hytrel# 4056 with 60 parts Chemigum# HR665, 4 parts Hytrel# masterbatch 10MS, 2 parts Hytrel# masterbatch G30HS, 100 parts Kisuma# 5B, 2 parts SRF, 20 parts Silica HDK H20, 4 parts Kemgard# 911A, 3 parts Sartomer #350, 6 parts Dythal#, 1.5 parts Kenreact#, 1.5 parts zinc stearate, 10 parts Plasticator# 85, 2 parts Vulcanox# MB-2, 0.5 parts Weston 618 and 4 parts Maglite DE. Samples prepared and irradiated as in Example 1 were found to have tensile strength 8.4 MPa, 100% modulus 4.2 MPa, elongation value 450%, and tear resistance 5.3N/mm. The K factor was 0.07 M$\Omega$km and the oxygen index 27.6. In the fluid resistance test, volume swelling after exposure to DERV, OX-38 and water was 13.5%, 11.6% and 2.1%; and elongation retention 100%, 100% and 89% respectively. Elongation values after ageing in an air oven were as follows:

9

| oven temperature | exposure time | elongation |
|---|---|---|
| 120°C | 14 days | 250% |
| | 28 days | 140% |
| 130°C | 7 days | 230% |
| | 14 days | 100% |
| | 21 days | 70% |
| | 28 days | 50% |
| 150°C | 3 days | 200% |
| | 5 days | 65% |
| | 7 days | 50% |
| | 9 days | 40% |

Example 22

This was identical with Example 21 except that the content of Kisuma# 5B was increased to 110 parts, zinc stearate was omitted, and 10 parts of Bisoflex# 810T (stab) was used instead of Plasticator# 85. Tensile strength was 7.8 MPa, 100% Modulus 4.4 MPa, initial elongation 400% and tear resistance 4.9 N/mm. The K factor was 0.73, and in the ageing test, the following elongation values were observed:

| ageing temperature | ageing period | elongation |
|---|---|---|
| 135°C | 7 days | 220% |
| | 14 days | 80% |
| | 21 days | 30% |
| | 28 days | (sample embrittled) |
| 150°C | 3 days | 150% |
| | 5 days | 50% |
| | 7 days | 40% |
| | 9 days | (sample embrittled) |

Example 23

This was similar to Example 22 except that 1.5 parts of Hytrel# masterbatch G41 and 35 parts Mistron Vapour# were added and SRF and Silica HDK H20 omitted. The tensile strength of the irradiated samples was 6.7 MPa, 100% Modulus 4.2 MPa, elongation value 350%, and tear resistance 5.6.

Example 24

This was identical with Example 23 except that 60 parts of Chemigum# HR365 was used instead of Chemigum# HR665. Tensile strength was found to be 6.1 MPa, 100% Modulus 4.0 MPa, initial elongation 370% and tear resistance 6.0 N/mm. Ageing in the air oven at 150°C reduced the elongation value to 55% after 3 days and 50% after 5 days.

Example 25

This was identical with Example 23 except that 1.5 parts Robac# NiBuD was added and MB-2 reduced to 1.5 parts. Tensile strength was found to be 5.4 MPa, 100% modulus 3.8 MPa, initial elongation 350% and tear resistance 5.6N/mm. Ageing in the air oven at 150°C reduced the elongation value to 90% after 3 days and 50% after 5 days.

Example 26

This was similar to Example 23 except that the content of Kisuma# 5B was increased to 120 parts, the

10

Mistron Vapour# and Bisoflex# 810T (stab) omitted, and 5 parts Plasticator# 85 added. The tensile strength of the irradiated samples was found to be 8.5 MPa, 100% Modulus 5.0 MPa, initial elongation 425% and tear resistance 6.0 N/mm. The K factor was 0.05 M $\Omega$ km and oxygen index 30.1. Fluid resistance was tested as before in DERV and water (but not in OX-38), and the results observed were:

|  | DERV | Water |
|---|---|---|
| Volume swelling | 14.5% | 10.5% |
| Tensile retention | 100% | 101% |
| Elongation retention | 91% | 100% |

Ageing in the air oven reduced the elongation values as follows:
at 120°C, to 110% after 21 days
at 135°C, to 220% after 7 days, 90% after 14 days, 70% after 21 days and 40% after 28 days
and at 150°C, to 110% after 3 days, 75% after 5 days, 60% after 7 days and 40% after 9 days.

Example 27

This was identical with Example 26 except that the content of Kisuma# 5B was reduced to 100 parts and 20 parts of Hydral # 705 and 0.4 parts of Silane A174 added. The tensile strength of the samples was 7.4 MPa, 100% modulus 7.1 MPa, elongation value 200% and K factor 0.03.

Example 28

This was identical with Example 27 except that the content of Chemigum# HR 665 was reduced to 40 parts and the contents of Hytrel# 4056 and Hytrel# masterbatches 10MS and G30HS increased to 54 parts, 6 parts and 3 parts respectively. The tensile strength of the samples was 7.7 MPa, 100% modulus 7.6 MPa, elongation value 125% and K factor 0.05.

Example 29

This was identical with Example 26 except that the content of Chemigum# HR 665 was reduced to 40 parts and the contents of Hytrel# 4056 and Hytrel# masterbatches 10MS and G30HS increased to 54 parts, 6 parts and 3 parts respectively. The tensile strength of the samples was 8.2 MPa, 100% modulus 4.9 MPa, elongation value 450% and tear resistance 6.5 N/mm. The K factor was 0.05 and the oxygen index 28.6. Heat ageing in the air oven at 120°C reduced the elongation to 60% in 21 days; at 135°C, to 65% in 7 days, 60% in 14 days, 40% in 21 days and 30% in 28 days; and at 150°C to 65% in 3 days, 40% in 5 days, 35% in 7 days and 20% in 9 days.

Example 30

A chemically-crosslinkable version of the composition of Example 21 was made by adding to it 1 part of Perkadox# 14/40 and blending on a rubber mill (steam heated initially but cooled as necessary to prevent serious fuming). Sheets of the same dimensions as in the previous Examples were moulded and cured at 166°C for about 18 minutes. Samples cut as before were found to have tensile strength of 9.23 MPa, elongation value 465%, 50% modulus 3.48 MPa, and tear strength 5.84 N/mm.

Example 31

Procedure C was used to blend 60 parts of the segmented copolymer Pebax# 2533(P) with 40 parts Chemigum# HR665, 20 parts Silica HDK-H20, 4 parts Kemgard# 911A, 100 parts Kisuma# 5E, 2 parts SRF, 4 parts of 70%-active TAC formulation, 1 part Flectol#, 1.5 parts Kenreact# TTS, 6 parts Dythal#, 1.5 parts zinc stearate, 2 parts Rhenogran # P50, and 1 part of Vulcanox# MB-2.

The tensile strength of the irradiated samples prepared as in Example 1 was found to be 8.3 MPa, 100% Modulus 2.8MPa, elongation value 650%, tear resistance 7.5 N/mm, and the K factor 0.0007. A fluid-resistance test as outlined in Example 1 was carried out with the following results:

|  | DERV | OX-38 | Water |
|---|---|---|---|
| Volume swelling | 17.7% | 21% | 5.4% |
| Tensile retention | 74% | 72% | 54% |
| Elongation retention | 94% | 88% | 58% |

Example 32

This was similar to Example 30 except that Pebax# 2533 was used instead of Pebax# 2533 (P), the content of Kisuma# 5E increased to 110 parts and 10 parts Bisoflex# TL79T (stab) added.

The tensile strength of the irradiated samples was 8.6 MPa, 100% modulus 3.2 MPa, elongation value 700%, and tear resistance 7.9 N/mm. The K factor was 0.56 and oxygen index 26.7. Fluid resistance was as follows:

|  | DERV | OX-38 | Water |
|---|---|---|---|
| Volume swelling | 20% | 27% | 6.2% |
| Tensile retention | 81% | 81% | 71% |
| Elongation retention | 93% | 93% | 82% |

Example 33

Procedure C was used to blend 70 parts of the segmented copolymer Pebax# 2533, 30 parts Chemigum# HR365, 20 parts Silica HDK-H20, 4 parts Kemgard# 911A, 100 parts Kisuma# 5B, 2 parts SRF, 4 parts of a dry powder comprising 70% TAC, 0.5 part Weston 618, 1.5 parts Kenreact# TTS, 6 parts Dythal#, 1.5 parts zinc stearate, 2 parts Rhenogran# P50, 2 parts of Vulcanox# MB-2 and 10 parts of Bisoflex# 810T (stab).

The tensile strength of the irradiated samples was found to be 9.3 MPa, 100% Modulus 3.2MPa, elongation value 650%, tear resistance 8.5 N/mm. The K factor was 0.12 and the oxygen index 26.7. Fluid resistance was as follows:

|  | DERV | OX-38 | Water |
|---|---|---|---|
| Volume swelling | 18.5% | 25% | 7.3% |
| Tensile retention | 83% | 82% | 60% |
| Elongation retention | 94% | 92% | 82% |

Example 34

This was similar to Example 32 except that Chemigum# HR665 was used instead of Chemigum# HR365, the content of Kisuma# 5B increased to 120 parts, 1 part of Flectol# added instead of the Weston 618, the content of Rhenogran# increased to 4 parts, and the zinc stearate and the Bisoflex # TL79T (stab) omitted.

The tensile strength of the irradiated samples was 8.6 MPa, 100% Modulus 4 MPa, elongation value 725%, and tear resistance 9 N/mm.

Example 35

Procedure A was used to blend 36 parts of Hytrel# 4056 with 60 parts Therban# 1707, 4 parts Hytrel# masterbatch 10MS, 2 parts Hytrel# masterbatch G30HS, 110 parts Ultrafine 15E, 20 parts Silica HDK-H20, 10 parts Platicator# 85, 2 parts SRF black, 4 parts Kemgard# 911A, 6 parts Dythal, 1.5 part Kenreact# TTS, 1.5 parts zinc stearate, 2 parts Vulcanox MB-2/MG, 0.5 part Weston 618, 4 parts Maglite# DE and 3 parts Sartomer# 350. After irradiation to a dose of 100 kGy, the tensile strength was 8.4 MN/m$^2$, elongation to break 390% and tear strength 8.9 N/mm. After ageing for 10.8 days at 150°C (simulating the effect of 40,000hrs at 85°C) the retention of tensile strength was about 91% and retention of elongation about 29% (value 115%).

In an accelerated swelling test, samples were exposed for one week to DERV at 50°C (simulating the effect of 4 weeks at 20°C) and to OX-38 lubricating oil at 70°C (simulating 4 weeks at 50°C). The sample that had been exposed to DERV retained 94% of its initial tensile strength and 99% of inital elongation, and volume swell was 14.1%; the sample that had been exposed to OX-38 retained 88% of its initial tensile strength and 95% of its initial elongation, and its volume swell was 11.6%.

Example 36

This was identical with Example 35, except that the Sartomer# 350 was replaced by the same quantity of HVA-2. Tensile strength was 8.5 $MN/m^2$, elongation to break 315% and tear strength 10.7 N/mm. After ageing for 10.8 days at 150°C the retention of tensile strength was about 72% and the retention of elongation 30% (value 95%). In the same accelerated swelling test as used in Example 35, the sample that had been exposed to DERV retained 96% of its initial tensile strength and 90% of its initial elongation, and its volume swell was 13.5%; the sample that had been exposed to OX-38 retained 91% of its initial tensile strength and 75% of its elongation, and its volume swell was 9.9%.

Example 37

This was identical with Example 35, except that the Plasticator# 85 was replaced by an equal quantity of Bisoflex# TOT; Tensile strength was 9.4 $MN/m^2$, elongation to break 450%, tear strength 11.7 N/mm. After ageing for 10.8 days at 150°C the retention of tensile strength was about 68% and the retention of elongation about 27% (value 120%). In the same accelerated swelling test as used in Example 35, the sample that had been exposed to DERV retained 93% of its initial tensile strength and 97% of its initial elongation, and its volume swell was 13.2%; the sample that had been exposed to OX-38 retained 82% of its initial tensile strength and 93% of its initial elongation; its volume swell was 11.0%.

**Claims**

1. A halogen-free, flame-retardant elastomeric composition which is cross-linkable at least by high-energy irradiation and (when cross-linked) is resistant to sea-water, hydrocarbon oils and hydraulic fluids comprising

   (A) an oil-resistant elastomeric thermoplastic segmented copolymer selected from polyether-polyesters and polyether-polyamides;

   (B) an elastomeric nitrile polymer having (i) a hydrocarbon main chain which chain is saturated or contains up to a maximum of one double bond and/or epoxidised double bond for every five of its carbon atoms and (ii) a minimum of one -CN side-chain per 22 chain carbon atoms and up to one hetero side chain per four carbon atoms with the proviso that at least 70% of the hetero side chains are -CN;

   (C) optionally up to one part for each three parts of ingredient (B) of another miscible elastomer which is a diene elastomer or an acrylic elastomer; and

   (D) an active flame-retardant filler that evolves substantial amounts of bound water on heating at some temperatures in the range 150-700°C;

   Ingredient (A) constituting 10-70% of total elastomer content and ingredient (D) being present in an amount up to about twice the total elastomer content but sufficient for the composition to have an oxygen index of at least 25.

2. A composition as claimed in Claim 1 in which Ingredient (A) is a segmented polyester elastomer.

3. A composition as claimed in Claim 1 in which Ingredient (A) is a segmented polyester/polyether elastomer constituted of polytetramethylene ether glycol terephthalate segments and 1, 4 butanediol segments.

4. A composition as claimed in Claim 1 in which Ingredient (A) is a segmented elastomeric polyether-polyamide.

5. A composition as claimed in Claim 1 in which Ingredient (A) is a segmented elastomeric polyether-

EP 0 251 791 B1

polyamide constituted of polyamide segments derived from 12-amino dodecanoic acid (or its lactam) and polyether segments derived from 1, 4 butanediol.

6. A composition as claimed in any one of the preceding Claims in which Ingredient (B) is a random copolymer of butadiene and acrylonitrile.

7. A composition as claimed in any one of Claims 1-5 in which Ingredient (B) is a random butadiene/acrylonitrile copolymer modified by hydrogenation, epoxidization, or the inclusion of a third monomer.

8. A composition as claimed in Claim 7 in which Ingredient (B) is fully hydrogenated.

9. A composition as claimed in any one of Claims 1-5 in which Ingredient (B) is a random copolymer of butadiene and acrylonitrile modified by the inclusion of a third monomer which introduces -COOH side chains.

10. A composition as claimed in any one of the preceding Claims in which Ingredient (D) is magnesium hydroxide.

11. A cable sheathed with the composition claimed in any one of the preceding Claims.

**Revendications**

1. Composition élastomère exempte d'halogène, ignifugée, qui est réticulable au moins par exposition à des rayonnements de haute énergie et qui, lorsqu'elle est réticulée, est résistante à l'eau de mer, aux huiles hydrocarbonées et aux fluides hydrauliques, comprenant :
   (A) un copolymère séquencé thermoplastique élastomère, résistant à l'huile, choisi parmi les polyéther-polyesters et les polyéther-polyamides ;
   (B) un polymère nitrile élastomère, ayant (i) une chaîne principale hydrocarbonée qui est saturée ou qui contient au maximum une double liaison et/ou double liaison époxydée pour cinq atomes de carbone, et (ii) au minimum une chaîne latérale -CN pour 22 atomes de carbone de la chaîne, et jusqu'à au plus une chaîne latérale hétéro pour quatre atomes de carbone, étant entendu qu'au moins 70 % des chaînes latérales hétéro sont -CN ;
   (C) éventuellement jusqu'à au plus une partie, pour trois parties de constituant (B), d'un autre élastomère miscible, qui est un élastomère diénique ou un élastomère acrylique ; et
   (D) une charge active, retardant l'inflammation, qui libère des quantités importantes d'eau liée lors du chauffage à une température située dans l'intervalle allant de 150 à 700°C ;
   le constituant (A) représentant 10 à 70 % de la teneur totale en élastomère et le constituant (D) étant présent en une quantité atteignant au plus environ deux fois la teneur totale en élastomère, mais suffisante pour que la composition ait un indice d'oxygène d'au moins 25.

2. Composition selon la revendication 1, dans laquelle le constituant (A) est un élastomère polyester séquencé.

3. Composition selon la revendication 1, dans laquelle le constituant (A) est un élastomère séquencé polyester/polyéther, constitué de séquences téréphtalate de poly(tétraméthylèneoxy)glycol et de séquences 1,4-butanediol.

4. Composition selon la revendication 1, dans laquelle le constituant (A) est un polyéther-polyamide séquencé élastomère.

5. Composition selon la revendication 1, dans laquelle le constituant (A) est un polyéther-polyamide séquencé élastomère, constitué de séquences polyamide provenant de l'acide 12-aminododécanoïque (ou de son lactame) et de séquences polyéther provenant du 1,4-butanediol.

6. Composition selon l'une quelconque des revendications précédentes, dans laquelle le constituant (B) est un copolymère statistique de butadiène et d'acrylonitrile.

**7.** Composition selon l'une quelconque des revendications 1 à 5, dans laquelle le constituant (B) est un copolymère statistique de butadiène et d'acrylonitrile, modifié par hydrogénation, époxydation ou inclusion d'un troisième monomère.

**8.** Composition selon la revendication 7, dans laquelle le constituant (B) est totalement hydrogéné.

**9.** Composition selon l'une quelconque des revendications 1 à 5, dans laquelle le constituant (B) est un copolymère statistique de butadiène et d'acrylonitrile, modifié par l'inclusion d'un troisième monomère qui introduit des chaînes latérales -COOH.

**10.** Composition selon l'une quelconque des revendications précédentes, dans laquelle le constituant (D) est l'hydroxyde de magnésium.

**11.** Câble enrobé de la composition selon l'une quelconque des revendications précédentes.

**Patentansprüche**

**1.** Halogenfreie, flammverzögernde elastomere Zusammensetzung, die zumindest durch Hochenergiestrahlung vernetzbar ist und die (wenn sie vernetzt ist) gegenüber Seewasser, Kohlenwasserstoffölen und hydraulischen Flüssigkeiten resistent ist, umfassend:

(A) ein ölresistentes elastomeres thermoplastisches segmentiertes Copolymer ausgewählt aus Polyetherpolyestern und Polyetherpolyamiden;

(B) ein elastomeres Nitrilpolymer, das (i) eine Kohlenwasserstoffhauptkette, wobei die Kette gesättigt ist oder bis zu einem Maximum von einer Doppelbindung und/oder epoxidierten Doppelbindung pro 5 seiner Kohlenstoffatome enthält, und (ii) ein Minimum von einer -CN Seitenkette pro 22 Kettenkohlenstoffatomen und bis zu einer Heteroseitenkette pro 4 Kohlenstoffatomen mit der Maßgabe, daß mindestens 70 % der Heteroseitenketten -CN sind aufweist;

(C) gegebenenfalls bis zu einem Teil eines anderen mischbaren Elastomeres, das ein Dienelastomer oder ein Acrylelastomer ist pro drei Teilen des Bestandteils (B); und

(D) einen aktiven flammverzögernden Füllstoff, der bei Erhitzen auf Temperaturen im Bereich von 150 bis 700 °C beträchtliche Mengen von gebundenem Wasser freisetzt;

wobei der Bestandteil (A) 10 bis 70 % des gesamten Elastomergehalts ausmacht und Bestandteil (D) bis zur zweifachen Menge des Gesamtelastomergehalts aber in einer hinreichenden Menge vorhanden ist, daß die Zusammensetzung einen Sauerstoffindex von mindestens 25 aufweist.

**2.** Zusammensetzung nach Anspruch 1, wobei der Bestandteil (A) ein segmentiertes Polyesterelastomer ist.

**3.** Zusammensetzung nach Anspruch 1, wobei der Bestandteil (A) ein segmentiertes Polyester/Polyetherelastomer ist, das aus Polytetramethylenetherglykolterephthalat-segmenten und 1,4-Butandiolsegmenten besteht.

**4.** Zusammensetzung nach Anspruch 1, wobei der Bestandteil (A) ein segmentiertes elastomeres Polyetherpolyamid ist.

**5.** Zusammensetzung nach Anspruch 1, wobei der Bestandteil (A) ein segmentiertes elastomeres Polyetherpolyamid ist, das aus aus 12-Aminododecansäure (oder ihrem Lactam) hergestellten Polyamidsegmenten, und aus 1,4-Butandiol hergestellten Polyethersegmenten besteht.

**6.** Zusammensetzung nach einem der vorstehenden Ansprüche, wobei der Bestandteil (B) ein statistisches Copolymer aus Butadien und Acrylnitril ist.

**7.** Zusammensetzung nach einem der Ansprüche 1 bis 5, wobei der Bestandteil (B) ein statistisches Butadien/Acrylnitrilcopolymer ist, das durch Hydrierung, Epoxidierung oder den Einschluß eines dritten Monomers modifiziert worden ist.

**8.** Zusammensetzung nach Anspruch 7, wobei der Bestandteil (B) vollständig hydriert ist.

**9.** Zusammensetzung nach einem der Ansprüche 1 bis 5, wobei der Bestandteil (B) ein statistisches Copolymer aus Butadien und Acrylnitril ist, das durch den Einschluß eines dritten -COOH Seitenketten einführenden Monomers, modifiziert worden ist.

**10.** Zusammensetzung nach einem der vorstehenden Ansprüche, wobei der Bestandteil (D) Magnesiumhydroxid ist.

**11.** Kabel, das mit der Zusammensetzung nach einem der vorstehenden Ansprüche ummantelt ist.

16